# EUROPEAN PATENT SPECIFICATION

(11) **EP 3 992 770 B1**
(45) Date of publication and mention of the grant of the patent: **15.01.2025**
(21) Application number: 20858807.9
(22) Date of filing: 14.08.2020
(51) Int. Cl.: H04L 45/7453, H04L 69/164, H04L 69/22, H04W 12/08, H04L 9/40

(54) **MESSAGE PROCESSING METHOD AND APPARATUS, AND COMPUTER STORAGE MEDIUM**
NACHRICHTENVERARBEITUNGSVERFAHREN UND -VORRICHTUNG SOWIE COMPUTERSPEICHERMEDIUM
PROCÉDÉ ET APPAREIL DE TRAITEMENT DE MESSAGES, ET SUPPORT DE STOCKAGE INFORMATIQUE

(30) Priority: 23.08.2019 CN 201910785349
(43) Date of publication of application: 04.05.2022
(73) Proprietor: ZTE Corporation, Shenzhen, Guangdong 518057 (CN)
(72) Inventor: LI, Huating, Shenzhen, Guangdong 518057 (CN); ZHOU, Jianguang, Shenzhen, Guangdong 518057 (CN); YANG, Liang, Shenzhen, Guangdong 518057 (CN)
(74) Representative: Savi, Massimiliano
(86) International application number: PCT/CN2020/109085
(87) International publication number: WO 2021/036812

(56) References cited:
- CN-A- 101 035 060
- CN-A- 102 546 398
- CN-A- 108 037 898
- CN-A- 109 309 626
- US-A1- 2008 268 881
- US-A1- 2012 079 143
- US-A1- 2018 329 743

## Description

### TECHNICAL FIELD

The present disclosure relates to the field of information processing and, in particular, to a message processing method and device, and a computer-readable storage medium.

### BACKGROUND

When user equipment (UE) accesses or disconnects from a cell, the base station receives a Reliable User Datagram Protocol (RUDP) message using the kernel protocol stack and forwards the message to the processing module via a socket. However, in the case of frequent access of large volume of UE, there are too many interruptions in receiving and sending packets at the network port, which significantly increases the workload of CPU.

US 2008/268881 A1 relates to a method and mobile device for silently fetching data. In one arrangement, the method can include the steps of receiving a silent fetch request from an originating device over a wireless communication channel in which the silent fetch request requests information and checking the authorization of the originating device. If the originating device is an authorized device, the requested information can be fetched and transmitted to the originating device. As an example, the requested information can be fetched from a receiving device or from a network server with which the receiving device is associated. As another example, the wireless communication channel can be a traffic channel that supports at least push-to-talk communications.

US 2018/329743 A1 relates to a data processing system having a poll mode driver and a library supporting protocol processing. The poll mode driver and the library are non-operating system functionalities. An application is provided. An operation system is configured while executing in kernel mode and in response to the application being determined to be unresponsive, use a helper process being an operating system functionality executing at user-mode to cause a receive or transmit mode of the application to continue.

### SUMMARY

The present disclosure provides a message processing method applicable to a base station, according to claim 1.

The present disclosure also provides a message processing device according to claim 6.

The present disclosure also provides a computer-readable storage medium storing one or more programs according to claim 7.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
Fig. 1 is a flowchart of a message processing method provided in the present disclosure;
Fig. 2 is an interactive schematic diagram of the message processing method provided in an embodiment of the present disclosure;
Fig. 3 is an interactive schematic diagram between modules shown in Fig. 2;
Fig. 4 is a flowchart of a processing method for a RUDP message provided by an embodiment of the present disclosure; and
Fig. 5 is a structural diagram of a message processing device provided in the present disclosure.

### DETAILED DESCRIPTION

In order to make the purposes, technical schemes and advantages of the present disclosure clear, the embodiments of the present disclosure will be described hereinafter in detail with reference to the accompanying drawings. It should be noted that any combinations of embodiments and features of the embodiments of the present disclosure without conflict are possible.

The steps shown in the flowcharts of the drawings may be performed in a computer system, such as with a set of computer-executable instructions. Furthermore, although example logical order is shown in the flowchart, in some cases, the steps shown or described may be performed in different order.

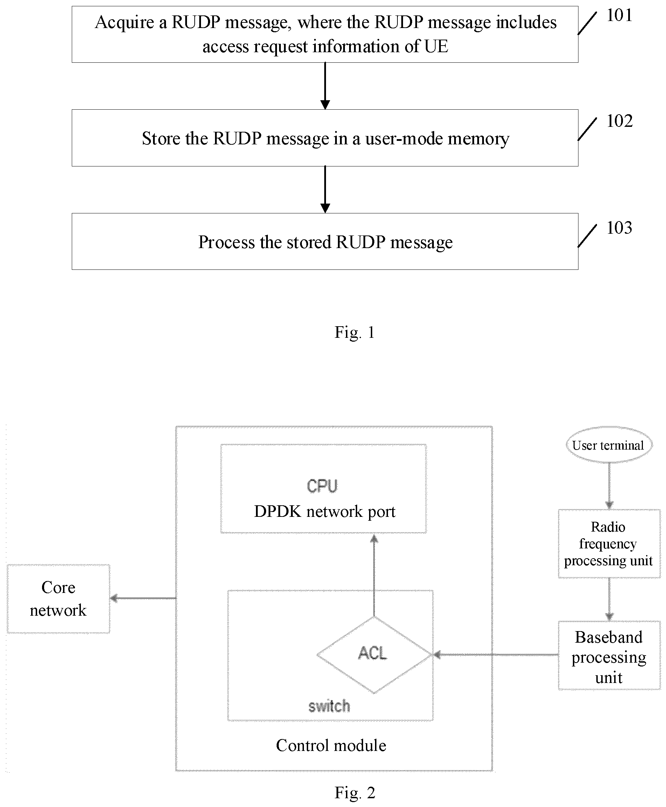

Fig. 1 is a flowchart of a message processing method provided in the present disclosure. The method shown in Fig. 1 that is applicable to a base station includes the following steps.

At step 101, a RUDP message is acquired, where the RUDP message includes access request information of UE; a baseband processing unit sends the RUDP message to a control module when the UE is accessing or disconnecting from the base station; and in practical applications, since the control module is not limited to receiving messages of the RUDP message type, but the control module also receives other types of messages, which requires the control module to identify the received messages.

In an embodiment, acquiring a RUDP message includes: acquiring a message sent by a baseband processing module; and performing RUDP message identification on the acquired message by utilizing an Access Control List (ACL) module within a switch chip to obtain a RUDP message.

In this embodiment, the identification of the message is implemented by utilizing the built-in ACL function of the switch chip, and a new method for message matching identification is provided compared to the utilization of Media Access Control Address (MAC) address matching in the existing technology, which has a lower hardware cost due to the utilization of the built-in function in the switch chip.

At step 102, the RUDP message is stored in a user-mode memory. In the process of analyzing the problem of overburdened CPU in the existing technology, the inventors found that the reason why adopting the kernel-mode protocol stack to receive a RUDP message significantly increases the workload of the CPU is the occurrence of memory copies of the RUDP message from the kernel mode to the user mode, especially in the case of frequent access of large volume of UE, which further increases the burden on the CPU due to too many interruptions in sending and receiving packets at the network port.

Based on the inventors' analysis, the inventors propose that, in the solution provided in the embodiments of the present disclosure, a RUDP message be stored directly into the user-mode memory, then there is no need to perform a memory copy, thus achieving the purpose of zero memory copies and achieving the effect of reducing the burden on the CPU.

At step 103, the stored RUDP message is processed.

In an embodiment, resource allocation and tunnel establishment for UE access is performed based on the content of the RUDP message.

According to the method embodiment provided in the present disclosure, an RUDP message is acquired, the RUDP message is stored in a user-mode memory, and the stored RUDP message is processed. By storing the RUDP message directly into the user-mode memory, there is no need to perform a memory copy, thus achieving the purpose of zero memory copies and achieving the effect of reducing the burden on the processor.

The method provided in the present disclosure is further illustrated as follows.

In an embodiment, performing identification on the acquired message by utilizing an ACL module within a switch chip to obtain a RUDP message includes: performing hash calculation on the acquired message to obtain a hash value of the message; performing a matching operation on the hash value of the received message by utilizing hash value information pre-stored in a Ternary Content Addressable Memory (TCAM) in the ACL module; and determining that the received message is a RUDP message in response to a result of matching being that the hash value of the message is consistent with the hash value stored in the TCAM.

In this embodiment, the ACL adopts the hash value of the underlying TCAM to perform rules hitting and matching operations without the involvement of other external software, which are fast and accurate. If at least two rules are set in the TCAM table, it is possible to match one message with at least two rules in parallel, thus improving the processing efficiency.

In an embodiment, storing the RUDP message in a user-mode memory includes: sending the RUDP message to a Data Plane Development Kit (DPDK) module; and storing the RUDP message in the user-mode memory by utilizing the DPDK module.

In this embodiment, the storage of the RUDP message in the user-mode memory is achieved by utilizing the DPDK module. By utilizing the open source characteristics of the DPDK module, software configuration of the DPDK is performed, thus accomplishing the purpose of storing the RUDP message into the user-mode memory without increasing the hardware development cost.

In an embodiment, sending the RUDP message to a DPDK module includes: redirecting a destination port for the RUDP message to a pre-acquired DPDK port; and sending out the RUDP message for which the destination port has been redirected.

In this embodiment, after the ACL module determines the RUDP message, by redirecting the destination port for the message, the RUDP message may be sent to the DPDK port for processing by the DPDK module. By means of the redirection of the destination port, it is possible to achieve the purpose of routing, within the control module, the RUDP message to the DPDK module without changing the destination port for the message sent by the baseband processing module, thus accomplishing the purpose of storing the RUDP message into the user-mode memory without destroying the transmission mechanism of the original communication protocol.

In an embodiment, storing the RUDP message in the user-mode memory by utilizing the DPDK module includes: polling and matching messages received at the DPDK port to acquire a RUDP message; and saving the RUDP message in a pre-set queue in the user-mode memory space.

In this embodiment, the message format characteristics information for RUDP messages may be adopted to poll and match messages received by the DPDK port to obtain a RUDP message, and then the RUDP message may be stored by utilizing a queue of the port. Since DPDK adopts techniques of Userspace I/O (UIO) and huge page, a message may be stored directly into the user-mode memory, thus achieving the purpose of storing data directly into the user-mode memory and achieving the purpose of zero copy.

In an embodiment, saving the RUDP message in a pre-set queue in the user-mode memory space includes: storing the RUDP message into the pre-set queue according to a pre-stored storage sequence; and after saving the RUDP message in the pre-set queue in the user-mode memory space, the method further includes: controlling, in accordance with a correspondence between pre-set queues and processing modules, each processing module to respond respectively to a RUDP message in a corresponding queue.

In this embodiment, the RUDP message may be stored by utilizing at least two queues, where the specific queue in which the received RUDP message is stored may be determined according to a pre-set policy, for example, a queue may be randomly selected, or a corresponding queue may be determined according to a pre-set calculation expression based on the receiving serial number of the RUDP message.

Since each queue has a corresponding processing module, each processing module processes a RUDP message in a corresponding queue, where the RUDP messages in the queues may be processed in a first-in-first-out manner. By processing RUDP messages in parallel by utilizing multiple processing modules, the processing efficiency of the messages can be effectively improved.

In an embodiment, processing the stored RUDP message includes: acquiring, after obtaining response information corresponding to the RUDP message, a user-mode memory required by the response information from the DPDK module; obtaining a response message corresponding to the RUDP message by utilizing the acquired user-mode memory and the response information; and sending the response message by utilizing the switch chip.

In this embodiment, after obtaining the response information corresponding to the RUDP message, the user-mode memory is requested via the DPDK module and filled in with the message, which is then sent out directly, so there is no interruption and memory copy, thus significantly simplifying the processing flow and improving the response efficiency.

In an embodiment, before storing the RUDP message in the user-mode memory, the method further includes: acquiring information on the number of times the UE has accessed and/or disconnected from a cell within a pre-set length of time; and storing a RUDP message corresponding to the UE in the user-mode memory in response to the information on the number of times the UE has accessed and/or disconnected from the cell meeting a pre-set determination condition of frequent access.

In this embodiment, by determining whether the UE has accessed the base station frequently, it is possible to effectively switch between the original message processing method and the message processing method of the present disclosure, thereby increasing the flexibility of the method application.

The method provided in the embodiments of the present disclosure is further illustrated as follows: in the case of frequent access to the base station by large volume of UE, a RUDP message may be identified through ACL, and the message may be sent, received and processed by utilizing DPDK, so as to avoid interruptions and achieve zero-copy to improve the transmission performance, thus enhancing user experience and winning customer reputation.

Fig. 2 is an interactive schematic diagram of the message processing method provided in an embodiment of the present disclosure. As shown in Fig. 2, after the user equipment has accessed the base station, a RUDP message may be output by the baseband processing unit after being processed by the radio frequency processing unit. The control module of the present disclosure processes the RUDP message by utilizing the built-in switch chip and the CPU and sends it to the core network after processing.

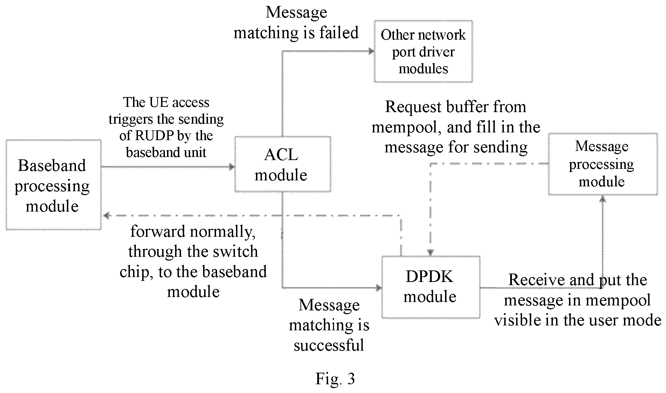

Fig. 3 is an interactive schematic diagram between modules shown in Fig. 2. The processing approach of the module shown in Fig. 3 includes the following steps: in the direction of data transmission for receiving the RUDP message, the baseband processing module triggers the sending of the RUDP to the ACL module after UE access; the ACL module performs matching by adopting a pre-stored RUDP message and sends the message to other network driver modules in response to the message matching being failed, and sends the message to the DPDK module in response to the message matching being successful; and after receiving the message, the DPDK module places the message in a memory visible in the user mode and processes the message in the user-mode memory by utilizing the message processing module.

In the direction of data transmission for sending the RUDP message, the message processing module requests memory from the user-mode memory, completes the filling of the message, and utilizes the DPDK module to send to the switch chip the RUDP message, which is then sent by the switch chip to the baseband processing module.

In the interaction diagram shown in Fig. 3, in the direction of receiving, after the RUDP message is identified in the switch chip, the RUDP message is stored directly via the DPDK port into the user-mode memory and then sent to the message processing module; and in the direction of sending, the Operation Support Systems (OSS) requests network port memory, fills in the message, and then sends it out directly. In the above-mentioned transmission process, there is no interruption or memory copy operations, which significantly simplifies the processing flow, improves the response efficiency, and qualitatively improves many indexes of the base station.

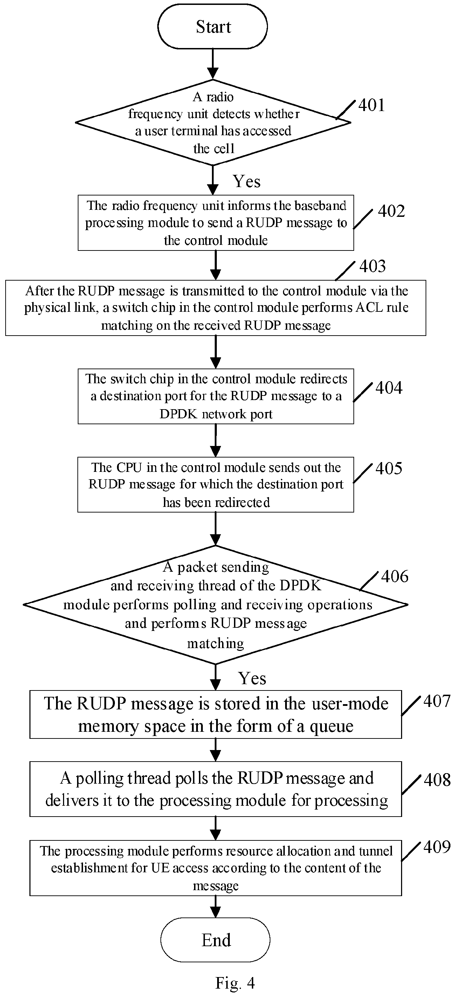

Fig. 4 is a flowchart of a processing method for a RUDP message provided by an embodiment of the present disclosure. The method shown in Fig. 4 includes the following steps.

At step 401, a radio frequency unit detects whether a user terminal has accessed the cell.

At step 402, after detecting that the user terminal has accessed the cell, the radio frequency unit informs the baseband processing module to send a RUDP message to the control module.

At step 403, after the RUDP message is transmitted to the control module via the physical link, a switch chip in the control module performs ACL rule matching on the received RUDP message.

During RUDP message identification, bit fields such as message type and port number are adopted in the existing technology to perform identification and screening one by one. However, when the amount of messages is large, adopting the method in the existing technology will significantly increase the load of CPU. In order to overcome the above problem, the embodiments of the present disclosure propose to use the ACL function at the switch chip level to identify and mark messages for forwarding at high speed by utilizing a TCAM table, which significantly improves the identification efficiency without increasing additional consumptions of CPU.

In response to the matching being successful, step 404 is executed; otherwise, the message is forwarded normally.

At step 404, the switch chip in the control module redirects a destination port for the RUDP message to a DPDK network port.

After the ACL identifies the RUDP message and forwards it to the DPDK network port, the DPDK puts, through polling, the message in a Memory Pool (mempool) which is visible in the user mode, and may directly deliver the message to the processing module for processing.

At step 405, the CPU in the control module sends out the RUDP message for which the destination port has been redirected.

At step 406, a packet sending and receiving thread of the DPDK module performs polling and receiving operations and performs message matching; and in response to the received message being a RUDP message, step 407 is executed; otherwise, a discard operation is performed for all messages.

At step 407, the RUDP message is stored in the user-mode memory space (mempool) in the form of a queue, where there is a binding relationship between DPDK packet sending and receiving threads and the processing modules in the CPU, each processing module being allocated with a corresponding packet sending and receiving queue.

At step 408, a polling thread polls the RUDP message and delivers the RUDP message to the processing module for processing.

At step 409, the processing module performs resource allocation and tunnel establishment for UE access according to the content of the message.

As can be seen from steps 405 to 409, after a message is received at the DPDK network port, the message is polled and received in the user mode and then delivered to the processing module, during which no interruptions need to be generated, no message identification needs to be performed in the user mode, and no copy of the message from the kernel mode to the user mode needs to occur, thus significantly saving system resources and performance.

The method provided in the embodiments of the present disclosure does not need to modify the hardware design, but can optimize the message processing by utilizing the open source DPDK and the ACL function that comes with the switch chip, thus improving the processing efficiency. In addition, compared with the original forwarding processing method, storing RUDP messages with the help of DPDK by utilizing a huge page table achieves the zero-copy purpose and binds the queues to the processing modules, thus improving the processing efficiency of the messages. Further, by the polling thread, the problems of task scheduling and frequent interruptions are avoided, thus significantly saving CPU resources and improving processing performance, making it possible to better ensure the use and experience of user terminal equipment.

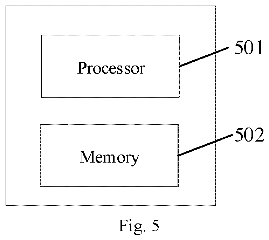

Fig. 5 is a structural diagram of a message processing device provided in the present disclosure. The device shown in Fig. 5 includes a processor 501 and a memory 502, where the memory 502 stores a computer program, and the processor 501 invokes the computer program in the memory 502 to implement the following operations, which include: acquiring a RUDP message, where the RUDP message includes access request information of UE; storing the RUDP message in a user-mode memory; and processing the stored RUDP message.

In an embodiment, the processor 501 invokes the computer program in the memory 502 to implement the operation of acquiring the RUDP message, which includes: acquiring a message sent by a baseband processing module; and performing RUDP message identification on the acquired message by utilizing an ACL module within a switch chip in the control module to obtain a RUDP message.

In an embodiment, the processor 501 invokes the computer program in the memory 502 to implement the operation of performing identification on the acquired message by utilizing the ACL module within the switch chip in the control module to obtain the RUDP message, which includes: performing hash calculation on the acquired message to obtain a hash value of the message; performing a matching operation on the hash value of the received message by utilizing hash value information pre-stored in a Ternary Content Addressable Memory 502 (TCAM) in the ACL module; and determining that the received message is a RUDP message in response to a result of matching being that the hash value of the message is consistent with the hash value stored in the TCAM.

In an embodiment, the processor 501 invokes the computer program in the memory 502 to implement the operation of storing the RUDP message in the user-mode memory, which includes: sending the RUDP message to a DPDK module; and storing the RUDP message in the user-mode memory by utilizing the DPDK module.

In an embodiment, the processor 501 invokes the computer program in the memory 502 to implement the operation of sending the RUDP message to the DPDK module, which includes: redirecting a destination port for the RUDP message to a pre-acquired DPDK port; and sending out the RUDP message for which the destination port has been redirected.

In an embodiment, the processor 501 invokes the computer program in the memory 502 to implement the operation of storing the RUDP message in the user-mode memory by utilizing the DPDK module, which includes: polling and matching messages received at the DPDK port to acquire a RUDP message; and saving the RUDP message in a pre-set queue in the user-mode memory space.

In an embodiment, the processor 501 invokes the computer program in the memory 502 to implement the operation of saving the RUDP message in the pre-set queue in the user-mode memory space, which includes: storing the RUDP message into the pre-set queue according to a pre-stored storage sequence. In an embodiment, after the processor 501 invokes the computer program in the memory 502 to implement the operation of saving the RUDP message in the pre-set queue in the user-mode memory space, the processor 501 invokes the computer program in the memory 502 to further implement the following operation, which includes: controlling, in accordance with a correspondence between pre-set queues and processing modules, each processing module to respond to a RUDP message in a corresponding queue.

In an embodiment, the processor 501 invokes the computer program in the memory 502 to implement the operation of processing the stored RUDP message, which includes: acquiring, after obtaining response information corresponding to the RUDP message, a user-mode memory required by the response information from the DPDK module; obtaining a response message corresponding to the RUDP message by utilizing the acquired user-mode memory and the response information; and sending the response message by utilizing the switch chip.

In an embodiment, before the processor 501 invokes the computer program in the memory 502 to implement the operation of storing the RUDP message in the pre-set queue in the user-mode memory space, the processor 501 invokes the computer program in the memory 502 to implement the following operations, which include: acquiring information on the number of times the UE has accessed and/or disconnected from a cell within a pre-set length of time; and storing a RUDP message corresponding to the UE in the user-mode memory in response to the information on the number of times the UE has accessed and/or disconnected from the cell meeting a pre-set determination condition of frequent access.

According to the device embodiment provided in the present disclosure, an RUDP message is acquired, the RUDP message is stored in a user-mode memory, and the stored RUDP message is processed. By storing the RUDP message directly into the user-mode memory, there is no need to perform a memory copy, thus achieving the purpose of zero memory copies and achieving the effect of reducing the burden on the processor.

The present disclosure further provides a computer-readable storage medium storing one or more programs which are executable by one or more processors to implement any method described above.

According to the computer-readable storage medium embodiment provided in the present disclosure, an RUDP message is acquired, the RUDP message is stored in a user-mode memory, and the stored RUDP message is processed. By storing the RUDP message directly into the user-mode memory, there is no need to perform a memory copy, thus achieving the purpose of zero memory copies and achieving the effect of reducing the burden on the processor.

It can be understood by those having ordinary skills in the art that all or some of the steps of the methods, systems and functional modules/units in the devices disclosed above can be implemented as software, firmware, hardware and appropriate combinations thereof. In a hardware embodiment, the division between functional modules/units mentioned in the above description does not necessarily correspond to the division of physical components. For example, a physical component may have multiple functions, or a function or step may be performed cooperatively by several physical components. Some or all of the components may be implemented as software executed by a processor, such as a digital signal processor or a microprocessor, or as hardware, or as an integrated circuit, such as an application-specific integrated circuit. Such software can be distributed on computer-readable media, which can include computer-readable storage media (or non-transitory media) and communication media (or transitory media). As well known to those having ordinary skills in the art, the term computer-readable storage medium includes volatile and nonvolatile, removable and non-removable media implemented in any method or technique for storing information, such as computer-readable instructions, data structures, program modules or other data. A computer-readable storage medium includes, but is not limited to, RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those having ordinary skills in the art that communication media typically contain computer-readable instructions, data structures, program modules or other data in a modulated data signal such as a carrier wave or other transmission mechanism, and can include any information transmission media. The invention is defined by the appended independent claims. Preferred embodiments are defined by the dependent claims. Further "embodiments" described in this description which do not fall within the scope of the appended claims shall serve as examples for a better understanding of the invention.

## Claims

1. A message processing method applicable to a base station, comprising:
acquiring a Reliable User Datagram Protocol, RUDP, message, wherein the RUDP message comprises access request information of user equipment, UE (101);
storing the RUDP message in a user-mode memory (102); and
processing the stored RUDP message (103);
**characterized in that**,
storing the RUDP message in a user-mode memory comprises:
sending the RUDP message to a Data Plane Development Kit, DPDK, module; and
storing the RUDP message in the user-mode memory by utilizing the DPDK module;
wherein sending the RUDP message to a DPDK module comprises:
redirecting a destination port for the RUDP message to a pre-acquired DPDK port of the DPDK module used to place the RUDP message in a memory space visible in user mode; and
sending out the RUDP message for which the destination port has been redirected;
wherein storing the RUDP message in the user-mode memory by utilizing the DPDK module comprises:
polling and matching messages received at the DPDK port to acquire a RUDP message; and
saving the RUDP message in a pre-set queue in the user-mode memory space;
wherein:
saving the RUDP message in a pre-set queue in the user-mode memory space comprises:
storing the RUDP message into the pre-set queue according to a pre-stored storage sequence;
and
after saving the RUDP message in the pre-set queue in the user-mode memory space, the method further comprises:
controlling, in accordance with a correspondence between pre-set queues and processing modules, each processing module to respond respectively to a RUDP message in a corresponding queue.

2. The method of claim 1, wherein acquiring a RUDP message comprises:
acquiring a message sent by a baseband processing module; and
performing RUDP message identification on the acquired message by utilizing an Access Control List, ACL, module within a switch chip to obtain a RUDP message.

3. The method of claim 2, wherein performing identification on the acquired message by utilizing an ACL module within a switch chip to obtain a RUDP message comprises:
performing hash calculation on the acquired message to obtain a hash value of the message;
performing a matching operation on the hash value of the received message by utilizing hash value information pre-stored in a Ternary Content Addressable Memory, TCAM, in the ACL module; and
determining that the received message is a RUDP message in response to a result of matching being that the hash value of the message is consistent with the hash value stored in the TCAM.

4. The method of claim 1, wherein processing the stored RUDP message comprises:
acquiring, after obtaining response information corresponding to the RUDP message, a user-mode memory required by the response information from the DPDK module;
obtaining a response message corresponding to the RUDP message by utilizing the acquired user-mode memory and the response information; and
sending the response message by utilizing the switch chip.

5. The method of claim 1, wherein before storing the RUDP message in the user-mode memory, the method further comprises:
acquiring information on a number of times that the UE has accessed and/or disconnected from a cell within a pre-set length of time; and
storing a RUDP message corresponding to the UE in the user-mode memory in response to the information on the number of times that the UE has accessed and/or disconnected from the cell meeting a pre-set determination condition of frequent access.

6. A message processing device comprising a processor (501) and a memory (502), wherein the memory (502) stores a computer program, which the processor (501) invokes to implement the method of any one of claims 1 to 5.

7. A computer-readable storage medium storing one or more programs which are executable by one or more processors to implement the method of any one of claims 1 to 5.

## Patentansprüche

1. Nachrichtenverarbeitungsverfahren, das auf eine Basisstation anwendbar ist, umfassend:
Erfassen einer RUDP-Nachricht (RUDP, Reliable User Datagram Protocol),
wobei die RUDP-Nachricht Zugriffsanfrageinformationen eines Benutzergeräts, UE, umfasst (101);
Speichern der RUDP-Nachricht in einem Benutzermodusspeicher (102); und
Verarbeiten der gespeicherten RUDP-Nachricht (103);
**dadurch gekennzeichnet, dass**
das Speichern der RUDP-Nachricht in einem Benutzermodusspeicher umfasst:
Senden der RUDP-Nachricht an ein DPDK-Modul (DPDK, Data Plane Development Kit); und
Speichern der RUDP-Nachricht in dem Benutzermodusspeicher unter Verwendung des DPDK-Moduls;
wobei das Senden der RUDP-Nachricht an das DPDK-Modul umfasst:
Umleiten eines Zielports für die RUDP-Nachricht an einen zuvor erfassten DPDK-Port des DPDK-Moduls, das verwendet wird, um die RUDP-Nachricht in einem im Benutzermodus sichtbaren Speicherplatz zu platzieren; und
Versenden der RUDP-Nachricht, für die der Zielport umgeleitet wurde;
wobei das Speichern der RUDP-Nachricht in dem Benutzermodusspeicher unter Verwendung des DPDK-Moduls umfasst:
Abfragen und Abgleichen von an dem DPDK-Port empfangenen Nachrichten, um eine RUDP-Nachricht zu erfassen; und
Speichern der RUDP-Nachricht in einer voreingestellten Warteschlange in dem Benutzermodusspeicherplatz;
wobei:
das Speichern der RUDP-Nachricht in einer voreingestellten Warteschlange in dem Benutzermodusspeicherplatz umfasst:
Speichern der RUDP-Nachricht in der voreingestellten Warteschlange gemäß einer vorgespeicherten Speicherfolge;
und
wobei das Verfahren nach dem Speichern der RUDP-Nachricht in der voreingestellten Warteschlange in dem Benutzermodusspeicherplatz ferner umfasst:
Steuern jedes Verarbeitungsmoduls in Übereinstimmung mit einer Entsprechung zwischen voreingestellten Warteschlangen und Verarbeitungsmodulen, um jeweils auf eine RUDP-Nachricht in einer entsprechenden Warteschlange zu antworten.

2. Verfahren nach Anspruch 1, wobei das Erfassen einer RUDP-Nachricht umfasst:
Erfassen einer von einem Basisbandverarbeitungsmodul gesendeten Nachricht; und
Durchführen einer RUDP-Nachrichtenidentifikation an der erfassten Nachricht unter Verwendung eines ACL-Moduls (ACL, Access Control List) innerhalb eines Switch-Chips, um eine RUDP-Nachricht zu erhalten.

3. Verfahren nach Anspruch 2, wobei das Durchführen einer Identifikation an der erfassten Nachricht unter Verwendung eines ACL-Moduls innerhalb eines Switch-Chips, um eine RUDP-Nachricht zu erhalten, umfasst:
Durchführen einer Hash-Berechnung an der erfassten Nachricht, um einen Hash-Wert der Nachricht zu erhalten;
Durchführen eines Abgleichvorgangs mit dem Hash-Wert der empfangenen Nachricht unter Verwendung von Hash-Wert-Informationen, die in einem ternären inhaltsadressierbaren Speicher (TCAM, Ternary Content Addressable Memory) im ACL-Modul vorgespeichert sind; und
Bestimmen, dass die empfangene Nachricht eine RUDP-Nachricht ist, als Reaktion auf ein Ergebnis des Abgleichs, dass der Hash-Wert der Nachricht mit dem in dem TCAM gespeicherten Hash-Wert übereinstimmt.

4. Verfahren nach Anspruch 1, wobei das Verarbeiten der gespeicherten RUDP-Nachricht umfasst:
Erfassen, nach dem Erhalten von Antwortinformationen, die der RUDP-Nachricht entsprechen, eines Benutzermodusspeichers, der von den Antwortinformationen des DPDK-Moduls benötigt wird;
Erhalten einer Antwortnachricht, die der RUDP-Nachricht entspricht, unter Verwendung des erfassten Benutzermodusspeichers und der Antwortinformationen; und
Senden der Antwortnachricht unter Verwendung des Switch-Chips.

5. Verfahren nach Anspruch 1, wobei das Verfahren vor dem Speichern der RUDP-Nachricht in dem Benutzermodusspeicher ferner umfasst:
Erfassen von Informationen darüber, wie oft das UE innerhalb einer voreingestellten Zeitspanne auf eine Zelle zugegriffen und/oder die Verbindung zu ihr getrennt hat; und
Speichern einer RUDP-Nachricht, die dem UE in dem Benutzermodusspeicher entspricht, als Reaktion auf die Informationen darüber, wie oft das UE auf eine Zelle, die eine voreingestellte Bestimmungsbedingung für häufige Zugriffe erfüllt, zugegriffen hat und/oder die Verbindung zu ihr getrennt hat.

6. Nachrichtenverarbeitungsvorrichtung, umfassend einen Prozessor (501) und einen Speicher (502), wobei der Speicher (502) ein Computerprogramm speichert, das der Prozessor (501) aufruft, um das Verfahren nach einem der Ansprüche 1 bis 5 durchzuführen.

7. Computerlesbares Speichermedium, das ein oder mehrere Programme speichert, die durch einen oder mehrere Prozessoren ausführbar sind, um das Verfahren nach einem der Ansprüche 1 bis 5 durchzuführen.

## Revendications

1. Procédé de traitement de message applicable à une station de base, comprenant :
acquérir un message de protocole de datagramme utilisateur fiable (Reliable User Datagram Protocol), RUDP, dans lequel le message RUDP comprend des informations de demande d'accès de l'équipement utilisateur (user equipment), UE (101) ;
stocker le message RUDP dans une mémoire en mode utilisateur (102) ; et
traiter le message RUDP stocké (103) ;
**caractérisé en ce que**,
le stockage du message RUDP dans une mémoire en mode utilisateur comprend :
envoyer le message RUDP à un module de kit de développement de plan de données (Data Plane Development Kit), DPDK ; et
stocker le message RUDP dans la mémoire en mode utilisateur en utilisant le module DPDK ;
dans lequel l'envoi du message RUDP à un module DPDK comprend :
rediriger un port de destination pour le message RUDP vers un port DPDK préacquis du module DPDK utilisé pour placer le message RUDP dans un espace mémoire visible en mode utilisateur ; et
envoyer le message RUDP pour lequel le port de destination a été redirigé ;
dans lequel le stockage du message RUDP dans la mémoire en mode utilisateur en utilisant le module DPDK comprend :
interroger et mettre en correspondance des messages reçus au port DPDK pour acquérir un message RUDP ; et
enregistrer le message RUDP dans une file d'attente prédéfinie dans l'espace mémoire en mode utilisateur ;
dans lequel :
enregistrer le message RUDP dans une file d'attente prédéfinie dans l'espace mémoire en mode utilisateur comprend :
stocker le message RUDP dans la file d'attente prédéfinie selon une séquence de stockage pré-stockée ;
et
après avoir enregistré le message RUDP dans la file d'attente prédéfinie dans l'espace mémoire en mode utilisateur, le procédé comprend en outre :
commander, en fonction d'une correspondance entre des files d'attente prédéfinies et des modules de traitement, chaque module de traitement pour répondre respectivement à un message RUDP dans une file d'attente correspondante.

2. Procédé selon la revendication 1, dans lequel l'acquisition d'un message RUDP comprend :
acquérir un message envoyé par un module de traitement de bande de base ; et
effectuer l'identification de message RUDP sur le message acquis en utilisant un module de liste de contrôle d'accès (Access Control List), ACL, dans une puce de commutation pour obtenir un message RUDP.

3. Procédé selon la revendication 2, dans lequel la réalisation de l'identification sur le message acquis en utilisant un module ACL à l'intérieur d'une puce de commutation pour obtenir un message RUDP comprend :
effectuer un calcul de hachage sur le message acquis pour obtenir une valeur de hachage du message ;
effectuer une opération de mise en correspondance sur la valeur de hachage du message reçu en utilisant des informations de valeur de hachage préstockées dans une mémoire associative ternaire (Ternary Content Addressable Memory), TCAM, dans le module ACL ; et
déterminer que le message reçu est un message RUDP en réponse à un résultat de mise en correspondance indiquant que la valeur de hachage du message est cohérente avec la valeur de hachage stockée dans la TCAM.

4. Procédé selon la revendication 1, dans lequel le traitement du message RUDP stocké comprend :
acquérir, après obtention des informations de réponse correspondant au message RUDP, une mémoire en mode utilisateur requise par les informations de réponse du module DPDK ;
obtenir un message de réponse correspondant au message RUDP en utilisant la mémoire en mode utilisateur acquise et les informations de réponse ; et
envoyer le message de réponse en utilisant la puce de commutation.

5. Procédé selon la revendication 1, dans lequel avant de stocker le message RUDP dans la mémoire en mode utilisateur, le procédé comprend en outre :
acquérir des informations sur un certain nombre de fois où l'UE a accédé à, et/ou s'est déconnecté d'une cellule dans un délai prédéfini ; et
stocker un message RUDP correspondant à l'UE dans la mémoire en mode utilisateur en réponse aux informations sur le nombre de fois que l'UE a accédé à, et/ou s'est déconnecté de la cellule répondant à une condition de détermination prédéfinie d'accès fréquent.

6. Dispositif de traitement de message comprenant un processeur (501) et une mémoire (502), dans lequel la mémoire (502) stocke un programme informatique, que le processeur (501) invoque pour mettre en oeuvre le procédé selon l'une quelconque des revendications 1 à 5.

7. Support de stockage lisible par ordinateur stockant un ou plusieurs programmes qui sont exécutables par un ou plusieurs processeurs pour mettre en oeuvre le procédé selon l'une quelconque des revendications 1 à 5.
